(19) Europäisches Patentamt European Patent Office Office européen des brevets

(11) **EP 4 375 502 B1**

(12) **EUROPÄISCHE PATENTSCHRIFT**

(45) Veröffentlichungstag und Bekanntmachung des Hinweises auf die Patenterteilung:
**11.02.2026 Patentblatt 2026/07**

(21) Anmeldenummer: **22209644.8**

(22) Anmeldetag: **25.11.2022**

(51) Internationale Patentklassifikation (IPC):
**F03D 7/02** (2006.01)

(52) Gemeinsame Patentklassifikation (CPC):
**F03D 7/0276; F03D 7/0224;** F05B 2260/821;
F05B 2270/1011; F05B 2270/327

(54) **VERFAHREN ZUM STEUERN EINER WINDENERGIEANLAGE**

METHOD FOR CONTROLLING A WIND TURBINE

PROCÉDÉ DE COMMANDE D'UNE ÉOLIENNE

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(43) Veröffentlichungstag der Anmeldung:
**29.05.2024 Patentblatt 2024/22**

(73) Patentinhaber: **Wobben Properties GmbH**
**26607 Aurich (DE)**

(72) Erfinder:
• **von Aswege, Enno**
**26629 Großefehn (DE)**
• **Vollack, Stephan**
**26605 Aurich (DE)**
• **Mühlenbrock, Henry**
**26759 Hinte (DE)**

(74) Vertreter: **Eisenführ Speiser**
**Patentanwälte Rechtsanwälte PartGmbB**
**Postfach 10 60 78**
**28060 Bremen (DE)**

(56) Entgegenhaltungen:
**EP-A1- 3 828 408      US-A1- 2015 176 570**

**Beschreibung**

Die vorliegende Erfindung betrifft ein Verfahren zum Steuern einer Windenergieanlage sowie eine entsprechende Windenergieanlage.

Windenergieanlagen erzeugen elektrische Leistung aus Wind. Dazu weisen sie einen aerodynamischen Rotor auf, der durch den Wind angetrieben wird und der sich mit einer Rotordrehzahl dreht.

Die Rotordrehzahl hängt im Teillastbetrieb, wenn die Windgeschwindigkeit kleiner als eine Nennwindgeschwindigkeit ist, von der Windgeschwindigkeit ab. Dazu wird häufig eine windgeschwindigkeitsabhängige Rotordrehzahl, die hier vereinfachend auch als Drehzahl bezeichnet werden kann, vorgegeben. Die Vorgabe erfolgt so, dass die Windenergieanlage optimal, insbesondere aerodynamisch optimal arbeitet. Für die Umsetzung im Betrieb der Windenergieanlage ist eine solche Drehzahlvorgabe in einer Drehzahl-Leistungskennlinie hinterlegt.

Im Volllastbetrieb, wenn die Windgeschwindigkeit über der Nennwindgeschwindigkeit liegt, und teilweise auch in einem Übergangsbereich vom Teillastbetrieb zum Volllastbetrieb, erfolgt eine Drehzahlregelung, die die Rotordrehzahl auf eine vorgebbare Drehzahl, oftmals die Nenndrehzahl, ausregelt. Im Grunde führt eine solche Drehzahlregelung überwiegend eine Funktion als Drehzahlbegrenzung aus, denn im Volllastbetrieb ist ausreichend Windleistung vorhanden, um die Rotordrehzahl über einen gewünschten Sollwert der Rotordrehzahl zu erhöhen, was durch die Drehzahlregelung verhindert werden soll.

Die Auslegung der Drehzahlregelung, sowohl hinsichtlich funktionaler Auslegung, also wie die Regelung funktionieren soll und insbesondere welche Struktur sie aufweist, als auch die Wahl von Parametern der Drehzahlregelung erfolgt häufig über in Richtlinien vorgeschriebenen Auslegungsfälle für Lasten. Solche Richtlinien schreiben also die Auslegung so vor, dass die Windenergieanlage für Lasten geeignet ist, die laut Richtlinie zu berücksichtigen sind.

Es kann aber vorkommen, dass eine solche Auslegung der Drehzahlregelung nicht ausreichend ist. Es kann nämlich vorkommen, dass in einigen Standorten Windverhältnisse auftreten, die steilen Rampen ähneln, also Windverhältnisse, bei denen die Windgeschwindigkeit mit der Zeit schnell und gegebenenfalls auch auf einen großen Wert ansteigt. In solchen Situationen können Überdrehzahlen auftreten, die zu Abschaltungen führen können. Solche Abschaltungen sind unerwünscht, weil sie zu Ertragsausfällen führen können und auch technisch unerwünscht sind, da sie eine erhöhte mechanische Belastung für die Windenergieanlage darstellen können.

Um das Problem zu lösen, könnte eine Reglerverstärkung erhöht werden, damit die Drehzahlregelung im Falle einer stark ansteigenden Windgeschwindigkeit entsprechend schnell einer Drehzahlerhöhung entgegenwirkt, um dadurch die Überdrehzahl zu verhindern.

Eine Drehzahlregelung mit großer Verstärkung kann aber ihrerseits zu unerwünschten Resultaten führen, wie beispielsweise zu Betriebslasterhöhungen oder Pitchwinkelschwingungen. Mit anderen Worten kann eine hohe Reglerverstärkung der Drehzahlregelung zu starken Verstellaktivitäten führen, wie das Verstellen der Blattwinkel der Rotorblätter des aerodynamischen Rotors, was dort zu einer hohen Belastung führen kann. Eine Drehzahlregelung über ein Generatormoment kann zu starken Abbremsungen des aerodynamischen Rotors führen, was ebenfalls für Teile der Windenergieanlage belastend ist, oder was zu einer zu hohen Abgabeleistung führt.

Stand der Technik ist in US 2015/176570 A1 offenbart.

Der vorliegenden Erfindung liegt somit die Aufgabe zugrunde, zumindest eines der oben genannten Probleme zu adressieren. Insbesondere soll eine Lösung vorgeschlagen werden, die auch bei starken Windgeschwindigkeitsanstiegen eine zu starke Erhöhung der Rotordrehzahl vermeidet. Insbesondere soll das Erreichen einer Überdrehzahl, die zur Abschaltung führt, vermieden werden, ohne aber die Betriebslasten zu stark zu erhöhen. Zumindest soll zu bisher bekannten Lösungen eine Alternative vorgeschlagen werden.

Erfindungsgemäß wird ein Verfahren nach Anspruch 1 vorgeschlagen. Das Verfahren betrifft somit das Steuern einer Windenergieanlage. Die Windenergieanlage weist in ihrem Blattwinkel verstellbare Rotorblätter auf. Ein solches Verstellen wird auch als Pitchen bezeichnet und die Blattwinkel als Pitchwinkel. Die Windenergieanlage ist somit unter Verwendung einer Drehzahlregelung mit einer variablen Rotordrehzahl betreibbar. Dazu ist die Drehzahlregelung vorbereitet, die Drehzahl auf einen veränderlichen Drehzahlsollwert zu regeln. Wie das erfolgt, wird nachfolgend noch erläutert. Der veränderliche Drehzahlsollwert kann insbesondere durch die Betriebsführung oder Auslegung der Windenergieanlage vorgegeben werden. Besonders im Volllastbetrieb kann der Drehzahlsollwert auf eine Nenndrehzahl gesetzt werden, auf die die Windenergieanlage ausgelegt ist.

Der Drehzahlsollwert kann aber auch temporär auf andere Werte gesetzt werden und er kann auch aus anderen Gründen, beispielsweise aufgrund von Vorschriften auf einen anderen, insbesondere geringeren Wert als Nenndrehzahl gesetzt werden.

Das Verfahren schlägt besonders vor, ein Prüfkriterium zum Prädizieren einer aufkommenden Überdrehzahl auszuwerten. Eine Überdrehzahl ist insbesondere eine Drehzahl, die so hoch ist, dass ein Abschalten ausgelöst wird. Insbesondere kann eine Überdrehzahl einen Drehzahlwert beschreiben, der oberhalb der Nenndrehzahl liegt, insbesondere um einen prozentualen Anteil von 1 bis 20 %, insbesondere 5 bis 15 % über der Nenndrehzahl, oder über einer anderen Solldrehzahl, besonders wenn eine andere Drehzahl als Nenndrehzahl vorgegeben wird, nämlich insbesondere eine geringere.

Das Prädizieren einer aufkommenden Überdrehzahl ist somit das Prädizieren einer Drehzahlerhöhung, die ohne Gegenmaßnahme zu einer Überdrehzahl führen würde, zumindest ohne geeignete Gegenmaßnahme.

In Abhängigkeit von dem wenigstens einen Prüfkriterium wird somit eine Überdrehzahl prädiziert. Auch hier geht es darum, dass diese Überdrehzahl gemäß der Prädiktion erwartet wird, sollte keine Gegenmaßnahme das verhindern, wenn also insbesondere die Drehzahlregelung das nicht verhindert.

Dann wird vorgeschlagen, dass die Drehzahlregelung verändert wird, wenn eine Überdrehzahl prädiziert wurde. Die Windenergieanlage weist somit eine Drehzahlregelung auf, die für den Fall einer prädizierten Überdrehzahl anders ausgebildet ist als für den Fall, wenn keine Überdrehzahl prädiziert wird.

Erfindungsgemäß erfolgt das Verändern der Drehzahlregelung durch Verändern wenigstens einer Reglerverstärkung.

Es kommt aber auch in Betracht, dass die Struktur der Drehzahlregelung verändert wird, indem beispielsweise bei prädizierter Überdrehzahl ein Differentialanteil, also ein D-Anteil ergänzt wird, um nur ein Beispiel zu nennen.

Es können auch nichtlineare Drehzahlregelungen vorgesehen sein und/oder eine Veränderung vorgesehen sein, bei der zwischen einer linearen Drehzahlregelung bei nicht prädizierter Überdrehzahl und einer nichtlinearen Regelung bei einer prädizierten Überdrehzahl gewechselt wird oder umgekehrt.

Hier wurde besonders erkannt, dass es sinnvoll sein kann, eine hohe Verstärkung der Drehzahlregelung nur in seltenen kritischen Situationen durchzuführen. Die Drehzahlregelung kann dann also aufgrund der hohen Verstärkung schnell reagieren. Das kann zu einer erhöhten Belastung der Windenergieanlage führen, sowohl für die Belastung der Stellglieder, die die Drehzahlregelung einsetzt, als auch zu einer höheren Belastung, die durch das möglicherweise erhaltene Abbremsen des Rotors resultieren. Das ist aber hinnehmbar, wenn es nur in solchen seltenen kritischen Situationen angewendet wird, wenn also nur dann eine hohe, die Windenergieanlage belastende, Verstärkung der Drehzahlregelung vorliegt.

Zusätzlich wurde aber erkannt, dass es wichtig ist, welches Kriterium zugrunde gelegt wird, um eine solche Erhöhung der Verstärkung der Drehzahl durchzuführen.

Es wurde besonders erkannt, dass als Kriterium das Zugrundelegen einer Überdrehzahlschwelle nicht ausreichen kann. Eine solche Überdrehzahlschwelle kann eine Drehzahlschwelle sein, die insbesondere größer als die Solldrehzahl bzw. Nenndrehzahl, aber geringer als die Überdrehzahl ist. Erreicht die Drehzahl die Überdrehzahlschwelle, wäre das das Kriterium, die Verstärkung der Drehzahlregelung zu erhöhen, um bei diesem Beispiel der Drehzahlregelungsveränderung zu bleiben. Es wurde aber erkannt, dass ein solches Kriterium, dass nur auf einen absoluten Drehzahlwert prüft, zu einer zu häufigen Veränderung der Drehzahlregelung führen kann. Beispielsweise kann die Rotordrehzahl einen vorgegebenen Überdrehzahlschwellwert erreichen, ohne dass sie sich danach weiter erhöhen muss. In diesem Fall würde dennoch eine Erhöhung der Drehzahlverstärkung durchgeführt werden. Das würde zu einer erhöhten Belastung führen, obwohl es nicht erforderlich wäre.

Deswegen wird vorgeschlagen, eine Überdrehzahl zu prädizieren. Insbesondere kann dies veranschaulichend daran erläutert werden, dass bei beispielsweise einer linear ansteigenden Drehzahl, insbesondere wenn der Anstieg steil ist, zu erwarten ist, dass sich die Drehzahl auch bis zur Überdrehzahl erhöht, und dann zu einer Abschaltung führt. Weist der Drehzahlanstieg aber ein zeitliches Abflachen auf, mag die Drehzahl zwar über den genannten Drehzahlschwellwert ansteigen, aufgrund der Abflachung ist aber gegebenenfalls nicht zu erwarten, dass der Überdrehzahlwert erreicht wird.

Durch die vorgeschlagene Prädiktion kann diese Unterscheidung vorgenommen werden. Dadurch kann erkannt werden, ob zu erwarten ist, dass die Drehzahl auch weiter bis zur Überdrehzahl ansteigen würde.

Ein Prüfkriterium kann dabei besonders ein zeitlicher Anstieg der Drehzahl sein, insbesondere auch die Art und Weise, wie die Drehzahl ansteigt, also ob sich ihre Anstiegsrate erhöht, verringert oder gleichbleibt und gegebenenfalls auch wie stark sie sich verringert oder erhöht. Einen zeitlichen Verlauf der Drehzahl zu extrapolieren, ist somit eine Möglichkeit bzw. ein Hilfsmittel der Prädiktion. Es gibt aber auch andere Möglichkeiten.

Erfindungsgemäß wird somit vorgeschlagen, dass die Veränderung der Drehzahlregelung so erfolgt, dass eine Reglerverstärkung der Drehzahlregelung erhöht wird, wenn eine Überdrehzahl prädiziert wurde. Wird eine Überdrehzahl prädiziert, wird also die Reglerverstärkung erhöht, was dazu führt, dass die Drehzahlabweichung, wenn also die Drehzahl bereits über dem Drehzahlsollwert ist, zu einer stärkeren Stellaktion führt, als wenn bei gleicher Drehzahlabweichung eine geringere Verstärkung vorliegt. Der Drehzahlerhöhung wird dadurch entsprechend stärker entgegengewirkt als dies der unveränderte Regler machen würde, und dadurch kann das Erreichen einer Überdrehzahl verhindert werden.

Gemäß einem Aspekt wird vorgeschlagen, dass eine Überdrehzahl eine Drehzahl bezeichnet, die einen Drehzahlgrenzwert erreicht oder überschreitet, der um einen Mindestüberschreitungswert über einer Solldrehzahl, insbesondere über einer Nenndrehzahl liegt. Insbesondere beträgt der Mindestüberschreitungswert wenigstens 5 %, vorzugsweise wenigstens 10 %, insbesondere wenigstens 15% der Solldrehzahl bzw. Nenndrehzahl. Außerdem oder alternativ wird das Verändern der Drehzahlregelung durchgeführt oder begonnen, bevor die Drehzahl den Drehzahlgrenzwert erreicht.

Durch das vorgeschlagene Verfahren wird somit besonders verhindert, dass eine Drehzahlerhöhung Werte von 5 oder 10 % oder 15% oder mehr oberhalb der Solldrehzahl bzw. Nenndrehzahl erreicht. Durch das Prädizieren kann frühzeitig die Drehzahlregelung verändert werden, um frühzeitig einer Drehzahlerhöhung entgegenzuwirken, um dadurch zu verhindern, dass die Überdrehzahl erreicht wird. Durch das Prädizieren wird erreicht, dass dafür das Verändern der Drehzahlregelung frühzeitig durchgeführt wird, um dadurch effektiv der Drehzahlerhöhung entgegenzuwirken. Insbesondere wird vorgeschlagen, dass das Verändern der Drehzahlregelung durchgeführt oder begonnen wird, bevor die Drehzahl einen Wert von 97 % des Drehzahlgrenzwertes erreicht. Für diesen Aspekt wird besonders davon ausgegangen, dass der Mindestüberschreitungswert wenigstens 5 % der Solldrehzahl bzw. Nenndrehzahl beträgt.

Besonders soll verhindert werden, dass die Drehzahl eine Nenndrehzahl zu stark überschreitet. Eine solche Überschreitung kann zu Schäden an der Windenergieanlage führen, denn die Windenergieanlage ist nur für einen Dauerbetrieb bis zur Nenndrehzahl ausgelegt. Es kommt aber auch in Betracht, dass, besonders temporär, anstatt der Nenndrehzahl andere Drehzahlen als Solldrehzahl vorgegeben werden. Das kann besonders Fälle betreffen, bei denen Vorschriften eine geringere Drehzahl verlangen, zumindest temporär. Es kommt aber auch in Betracht, dass besondere Betriebsund/oder Umweltsituationen als Solldrehzahl eine Drehzahl vorgeben, die geringer als die Nenndrehzahl ist. Das kann bspw. im Sturmfall sein oder bei sehr tiefen Außentemperaturen, die zu so sprödem Material führen können, dass ein Betrieb mit einer gegenüber der Nenndrehzahl reduzierten Drehzahl ratsam ist. Jegliche nachfolgenden Beschreibungen, die im Zusammenhang mit der Nenndrehzahl gegeben sind, sind sinngemäß auch auf andere Solldrehzahlen anzuwenden.

Gemäß einem Aspekt wird vorgeschlagen, dass das Verändern der Drehzahlregelung nur durchgeführt oder begonnen wird, wenn die Drehzahl über 90%, insbesondere über 100% der Solldrehzahl bzw. Nenndrehzahl liegt. Dadurch kann verhindert werden, dass bei kleinen Drehzahlen fälschlich, oder zu früh eine Überdrehzahl prädiziert wird. Damit wird ein zu häufiges oder zu frühes Ändern der Drehzahlregelung verhindert.

Dadurch, dass gemäß einer Variante aber bereits bei einem Wert von 90% der Solldrehzahl die Drehzahlregelung verändert wird, ist es dennoch möglich, vergleichsweise früh einer Überdrehzahl vorzubeugen. Das ist somit früher möglich, als bei Verfahren, bei denen eine drohende Überdrehzahl nur von absoluten Werten abgeleitet wird, die systembedingt über der Solldrehzahl liegen müssen. Somit kann selbst mit der Variante, die erst ab 100% der Solldrehzahl eine Drehzahlveränderung vorsieht, früher als bei herkömmlichen Verfahren reagiert werden.

Gemäß einem Aspekt wird vorgeschlagen, dass zum Prädizieren einer aufkommenden Überdrehzahl ein Drehzahlverlauf als zeitlicher Verlauf der Drehzahl bis zu einem aktuellen Zeitpunkt aufgenommen und über den aktuellen Zeitpunkt hinaus zu einem Prüfzeitpunkt extrapoliert wird. Abhängig von diesem Drehzahlverlauf wird eine aufkommende Überdrehzahl prädiziert. Es kommen dabei mehrere Möglichkeiten in Betracht, bei denen von dem Drehzahlverlauf auf eine aufkommende Überdrehzahl geschlossen wird.

Eine Möglichkeit ist, dass der Drehzahlverlauf bis zum Prüfzeitpunkt einen Drehzahlanstieg aufweist, der über einem vorgebbaren Anstiegsgrenzwert liegt. Wenn also der Drehzahlverlauf besonders steil ist, wird von einer aufkommenden Überdrehzahl ausgegangen. Über den Anstiegsgrenzwert kann festgelegt werden, was als zu steiler Anstieg anzusehen ist. Für das Festlegen bzw. Vorgeben eines solchen Anstiegsgrenzwertes können Erfahrungswerte früherer Messungen zugrunde gelegt werden, bei denen es zu einer Überdrehzahl gekommen ist.

Eine weitere Möglichkeit, auf eine aufkommende Überdrehzahl zu schließen, also eine aufkommende Überdrehzahl zu prädizieren, ist eine Veränderung der Steigung des Drehzahlverlaufs auszuwerten. Wenn der Drehzahlverlauf eine mit der Zeit zunehmende Steigung aufweist, ist auf eine aufkommende Überdrehzahl zu schließen, diese wird dann also prädiziert. Hier wird also eine aufkommende Überdrehzahl prädiziert, wenn eine zeitliche Ableitung, also Differentiation, der Steigung des Drehzahlverlaufs positiv ist. Anschaulich gesprochen ist ein solcher Drehzahlverlauf nach oben gebogen.

Hier wurde besonders erkannt, dass bei zunehmender Steigung bald eine Überdrehzahl erreicht werden kann. Es kommt zwar in Betracht, dass eine zunehmende Steigung auch wieder abfällt, aber die Zeit, in der eine über Solldrehzahl bzw. über Nenndrehzahl ansteigende Drehzahl Überdrehzahl erreicht, kann sehr kurz sein und beispielsweise im Bereich von nur einigen Sekunden liegen. Wird in diesem kurzen Zeitbereich eine zunehmende Steigung erkannt, kann nicht davon ausgegangen werden, dass diese noch innerhalb dieses kurzen Zeitbereichs sich quasi wieder fängt.

Die Möglichkeiten, den Drehzahlverlauf auszuwerten können auch kombiniert werden. So kann eine Änderung der Steigung und der absolute Wert der Steigung zusammen ausgewertet werden. Beispielsweise kann eine schwache Steigungsabnahme trotzdem zu einer Überdrehzahl führen, wenn die Steigung groß ist. Bei einer starken Steigungsabnahme muss die hohe Steigung aber nicht zu einer Überdrehzahl führen.

Besonders die Auswertung der Steigung und einer Veränderung der Steigung kann auch für den Drehzahlverlauf ohne ausdrückliche Extrapolation durchgeführt werden, denn durch die Auswertung der Steigung und der Veränderung der Steigung des Drehzahlverlaufs wird indirekt eine Aussage über den zukünftigen, also zu erwartenden Drehzahlverlauf gemacht.

Erreicht der extrapolierte Drehzahlverlauf bis zum Prüfzeitpunkt Überdrehzahl, so ist dies eine weitere Möglichkeit, eine aufkommende Überdrehzahl zu prädizieren. Vorzugsweise kann eine solche Extrapolation linear, quadratisch oder mit noch höherer Ordnung sein, was auch von der Anzahl aufgenommener Drehzahlwerte abhängen kann.

Besonders kann eine Extrapolation dadurch erfolgen, dass aus erfassten Drehzahlwerten eine Drehzahlfunktion in Abhängigkeit von der Zeit bestimmt wird. Eine solche Drehzahlfunktion kann als Polynomfunktion dargestellt werden.

Eine lineare Extrapolation führt zu einer linearen Polynomfunktion als Drehzahlfunktion n(t) mit den Polynomparametern $a_0$ und $a_1$ und der Zeit t:

$$n(t) = a_0 + a_1 * t$$

Eine quadratische Extrapolation führt zu einer quadratischen Polynomfunktion als Drehzahlfunktion n(t) mit den Polynomparametern $a_0$, $a_1$ und $a_2$ und der Zeit t:

$$n(t) = a_0 + a_1 * t + a_2 * t^2$$

Eine Extrapolation n-ter Ordnung führt entsprechend zu einer Polynomfunktion n-ter Ordnung als Drehzahlfunktion n(t) mit den Polynomparametern $a_0$, $a_1$ bis $a_n$ und der Zeit t:

$$n(t) = a_0 + a_1 * t \ldots + a_n * t^n$$

Zum Bestimmen der Drehzahlfunktionen muss wenigstens ein Drehzahlwert mehr als die Ordnung aufgenommen werden, also wenigstens n+1 Werte für eine Polynomfunktion n-ter Ordnung. Werden genau n+1 Drehzahlwerte erfasst, können die Polynomparameter eindeutig berechnet werden. Werden mehr als n+1 Drehzahlwerte erfasst, liegt also eine Überbestimmung vor, können die Polynomparameter bspw. mit der Methode der kleinsten Fehlerquadrate bestimmt werden.

Für beide Fälle, also mit oder ohne Überbestimmung, kann ein Gleichungssystem mit so vielen Gleichungen wie erfassten Werten aufgestellt werden, das entsprechend aufgelöst wird. Für die Methode der kleinsten Fehlerquadrate kann das Gleichungssystem numerisch mit Hilfe einer Pseudoinversen aufgelöst werden.

Besonders bevorzugt wird eine quadratische Extrapolation vorgenommen, also die Drehzahlfunktion durch eine quadratische Polynomfunktion gebildet. Durch eine solche Extrapolation kann auch die Tendenz des Drehzahlverlaufs berücksichtigt werden, also ob eine Steigung der Drehzahlfunktion zunimmt, abnimmt oder gleichbleibt. Dabei sind die drei Polynomparameter auch bei Überbestimmung einfach zu berechnen, da nur von einer 3x3 Matrix eine Inverse zu bilden ist. Die Berechnung einer solchen Inversen kann bei Kenntnis der Anzahl auszuwertender Drehzahlmesswerte vorprogrammiert sein, sodass eine Implementierung als online-Berechnung möglich ist.

Die Drehzahlfunktion stellt dann für zukünftige Drehzahlwerte den extrapolierten Drehzahlverlauf dar. Erreicht der extrapolierte Drehzahlverlauf Überdrehzahl, ist noch ausreichend Zeit, zu reagieren, sodass die tatsächliche Drehzahl noch ausreichend kontrolliert werden kann, sodass Überdrehzahl nicht mehr erreicht wird.

Gemäß einer weiteren Möglichkeit wird vorgeschlagen, dass der extrapolierte Drehzahlverlauf vor Erreichen des Prüfzeitpunktes eine Grenzdrehzahl überschreitet, die kleiner als die Überdrehzahl ist. Hier liegt der Gedanke zugrunde, dass dann, wenn der Drehzahlverlauf vor dem Prüfzeitpunkt, also früher einen geringeren Grenzwert überschreitet, dass er dann später die Überdrehzahl erreichen kann. Das Vorgeben einer solchen Grenzdrehzahl ist zudem auf einfache Art und Weise möglich. Es braucht also nur der Drehzahlverlauf ermittelt, wenigstens bis zum Prüfzeitpunkt extrapoliert zu werden, und zu dem Vorprüfzeitpunkt mit der Grenzdrehzahl verglichen zu werden. Beispielsweise kann der Vorprüfzeitpunkt zeitlich zwischen dem aktuellen Zeitpunkt und dem Prüfzeitpunkt liegen und die Grenzdrehzahl einen Mittelwert zwischen Solldrehzahl bzw. Nenndrehzahl und Überdrehzahl annehmen. Dann wird von einer aufkommenden Überdrehzahl ausgegangen, wenn quasi nach der Hälfte der Zeit der extrapolierte Drehzahlverlauf die Hälfte eines Drehzahlanstiegs von Solldrehzahl bzw. Nenndrehzahl bis Überdrehzahl erreicht hat.

Gemäß einem Aspekt wird vorgeschlagen, dass ein quantitatives Verändern der Drehzahlregelung, insbesondere das Erhöhen einer Reglerverstärkung in Abhängigkeit von dem extrapolierten Drehzahlverlauf erfolgt. Somit wird vorgeschlagen, dass nicht nur in Abhängigkeit von dem extrapolierten Drehzahlverlauf entschieden wird, ob überhaupt die Drehzahlverstärkung erhöht wird, sondern dass auch die Höhe der Reglerverstärkung, oder andere Veränderungen der Drehzahlregelung, von dem extrapolierten Drehzahlverlauf abhängen. Insoweit wird der extrapolierte Drehzahlverlauf auch zusätzlich quantitativ ausgewertet.

Insbesondere erfolgt dieses quantitative Verändern der Drehzahlregelung, insbesondere das Erhöhen der Reglerverstärkung in Abhängigkeit von einem Betrag des Drehzahlanstiegs. Insbesondere wird die Reglerverstärkung umso mehr erhöht, je größer der Drehzahlanstieg ist.

Hier wurde erkannt, dass es nicht nur möglich ist, über den extrapolierten Drehzahlverlauf rechtzeitig eine drohende Überdrehzahl zu erkennen, sondern es wurde auch erkannt, dass der extrapolierte Drehzahlverlauf die Möglichkeit eröffnet, gezielt stärker oder weniger stark der Drehzahlerhöhung entgegenzusteuern.

Außerdem oder alternativ wird vorgeschlagen, dass das quantitative Verändern in Abhängigkeit von einem Abstand der Drehzahl oder des extrapolierten Drehzahlverlaufs von der Grenzdrehzahl oder einem Drehzahlschwellwert erfolgt, der kleiner als die Grenzdrehzahl ist, und größer als die Solldrehzahl bzw. Nenndrehzahl. Besonders wird vorgeschlagen, dass umso stärker gegengesteuert wird, insbesondere die Reglerverstärkung also umso höher eingestellt wird, je geringer der Abstand der Drehzahl oder des extrapolierten Drehzahlverlaufs von der Grenzdrehzahl oder dem Drehzahlschwellwert ist. Der Abstand bezieht sich somit auf die Differenz zwischen Grenzdrehzahl und Drehzahl, so dass der Abstand also positiv ist, wenn die Drehzahl geringer als die Grenzdrehzahl ist. Mit anderen Worten betrifft der Abstand das Annähern der Drehzahl von unten an die Grenzdrehzahl. Gleiches gilt für den Drehzahlschwellwert.

Bei der Betrachtung des extrapolierten Drehzahlverlaufs kann der Abstand zum Prüfzeitpunkt ermittelt werden. Dadurch ist ein fest definierbares Kriterium möglich, das auch eine gute Vergleichbarkeit und Wiederholbarkeit der Auswertung des Abstandes ermöglicht.

Insbesondere erfolgt das quantitative Verändern der Drehzahlregelung so, dass die Reglerverstärkung umso stärker erhöht wird, je größer ein Drehzahlanstieg des Drehzahlverlaufs, insbesondere des extrapolierten Drehzahlverlaufs ist und/oder je näher der extrapolierte Drehzahlverlauf der Grenzdrehzahl kommt. Letzteres ist so zu verstehen, dass der Drehzahlverlauf aber noch unter der Grenzdrehzahl liegt.

Erfindungsgemäß wird vorgeschlagen, dass eine Drehzahlregelung unter Verwendung einer Blattwinkelverstellung vorgesehen ist, bei der der Blattwinkel in Abhängigkeit von der Drehzahl verändert wird. Insbesondere kann hier der Blattwinkel oder eine Verstellrate des Blattwinkels, als Stellgröße der Drehzahlregelung bezeichnet werden. Die Drehzahlregelung arbeitet insbesondere so, dass eine Drehzahlabweichung, also eine Differenz zwischen Drehzahl-Sollwert und Drehzahl-Istwert, was auch als Regelabweichung bezeichnet werden kann, über einen Regler zu einem vorgesehenen Blattwinkel führt, oder über einen Regler zu einer vorgesehenen Verstellrate des Blattwinkels führt.

Dazu wird erfindungsgemäß weiter vorgeschlagen, dass eine Überdrehzahl prädiziert wird, wenn der Blattwinkel um einen vorgebbaren Differenzblattwinkel von einem veränderlichen Referenzblattwinkel abweicht. Hier wurde besonders erkannt, dass im Falle einer solchen Drehzahlregelung unter Verwendung einer Blattwinkelverstellung der Blattwinkel Aufschluss über die Drehzahl geben kann. Es kann ausgehend von diesem Gedanken ein Referenzblattwinkel vorgegeben werden, der aktuell zu erwarten ist, insbesondere im stationären Betrieb zu erwarten ist. Weicht der Blattwinkel von diesem Referenzblattwinkel ab, deutet es darauf hin, dass die Drehzahlregelung eine erhöhte Stellaktivität hat. Eine solche erhöhte Stellaktivität kann auf eine schnelle, insbesondere zu schnelle Veränderung der Drehzahl hindeuten und damit eine Überdrehzahl ankündigen.

Insbesondere wird vorgeschlagen, dass als Referenzblattwinkel ein Idealblattwinkel vorgegeben wird, und der Idealblattwinkel einen Blattwinkel beschreibt, der zu einem aktuellen Betriebspunkt unter stationären Bedingungen zu einer konstanten Drehzahl führt.

Der Betrieb einer Windenergieanlage ist üblicherweise in seinem Verhalten gut bekannt und teilweise sehr genau vorgegeben. Einem aktuellen Betriebspunkt unter stationären Bedingungen, insbesondere idealen Bedingungen, bei denen sich der Wind nicht ändert, kann ein Blattwinkel zugeordnet werden, der also für diesen Betriebspunkt zu erwarten ist. Dieser Blattwinkel wird als Idealblattwinkel bezeichnet, denn er stellt sich ein, wenn alle Bedingungen ideal sind. Das alle Bedingungen ideal sind bedeutet in diesem Fall, dass sie den Voraussetzungen entsprechen, die besonders bei der Auslegung der Windenergieanlage zugrunde gelegt wurden. Stellt sich also dieser Betriebspunkt ein, ist mit dem Idealblattwinkel zu rechnen. Dieser wird somit als Referenzblattwinkel zugrunde gelegt und mit ihm wird der tatsächliche Blattwinkel verglichen.

Sind der tatsächliche Blattwinkel und der Referenzblattwinkel, in diesem Fall also der Idealblattwinkel, identisch, liegen entsprechend auch ideale Bedingungen vor, insbesondere stationäre Bedingungen. Weicht aber der Blattwinkel von diesem idealen Referenzblattwinkel ab, lässt dies einen Schluss auf Veränderungen und je nach Größe der Abweichung auf eine drohende Überdrehzahl zu.

Insbesondere wird vorgeschlagen, dass der aktuelle Betriebspunkt durch einen aktuellen Drehzahlwert, eine aktuelle Generatorleistung und eine aktuelle Windgeschwindigkeit gekennzeichnet ist. Durch diese Werte kann der Betriebspunkt gut festgelegt werden und dazu gibt es üblicherweise einen Idealblattwinkel, der sich aufgrund der Auslegung der Windenergieanlage einstellen sollte. Dieser kann entsprechend gut als Referenzblattwinkel verwendet werden, um Abweichungen zu erkennen.

Gemäß einem Aspekt wird vorgeschlagen, dass ein quantitatives Verändern der Drehzahlregelung, insbesondere das Erhöhen der Reglerverstärkung, in Abhängigkeit von einem Betrag der Blattwinkelabweichung erfolgt, um die der Blattwinkel von dem veränderlichen Referenzblattwinkel abweicht. Insbesondere erfolgt das Verändern der Drehzahlregelung so, dass die Reglerverstärkung umso stärker erhöht wird, je größer die Blattwinkelabweichung ist.

Hier wurde besonders erkannt, dass eine Abweichung des Blattwinkels von dem Referenzblattwinkel, also insbesondere die Abweichung des Blattwinkels vom Idealblattwinkel, nicht nur ein Indikator dafür sein kann, dass eine Überdrehzahl droht, sondern dass diese Abweichung auch quantitativ ausgewertet werden kann. Je größer diese Abweichung ist, umso stärker war auch die Stellaktivität der Drehzahlregelung. Umso stärker hat also die Drehzahlregelung versucht, einer Drehzahlerhöhung entgegenzuwirken. Hier wurde besonders erkannt, dass die Drehzahlregelung schließlich auch bewirkt, dass einer Drehzahlerhöhung entgegengewirkt wird. Die Beobachtung der Drehzahl bzw. Drehzahlveränderung ist somit die Beobachtung einer geregelten Drehzahl. Insbesondere ein starker Anstieg der Windgeschwindigkeit, der zu einer Drehzahlerhöhung führen kann, ist in einer solchen geregelten Drehzahl weniger stark erkennbar.

Gemäß einer Variante wird vorgeschlagen, dass die Reglerverstärkung erhöht wird, wenn die Blattwinkelabweichung einen vorbestimmten Mindestabweichungswert überschreitet. Dadurch kann erreicht werden, dass geringe Abweichungen, die im Betrieb vorkommen können, ohne dass eine Überdrehzahl droht, nicht als drohende Überdrehzahl interpretiert werden. Der vorbestimmte Mindestabweichungswert kann vorzugsweise wenigstens 3°, insbesondere wenigstens 5° betragen.

Jedenfalls gibt auch die Abweichung des Blattwinkels von dem Referenzblattwinkel, also besonders von dem Idealblattwinkel, quantitativ Aufschluss über die Stellaktivität der Drehzahlregelung und damit quantitativ Aufschluss über den Anstieg der Windgeschwindigkeit, der zur Beschleunigung des Rotors führt. Je größer die Abweichung zwischen Blattwinkel und Referenzblattwinkel, umso stärker ist der Anstieg der Windgeschwindigkeit, und umso stärker ist die Gefahr einer Überdrehzahl. Entsprechend kann auch die Reglerverstärkung quantitativ angepasst werden, also umso stärker je größer die Blattwinkelabweichung ist.

Gemäß einem Aspekt wird vorgeschlagen, dass eine Dämpfungsregelung vorgesehen ist, die eine von einer erfassten Längsschwingung der Windenergie abhängige Veränderung des Blattwinkels aufweist, um die Längsschwingung zu dämpfen, und dass die Dämpfungsregelung verändert wird, wenn eine Überdrehzahl prädiziert wurde. Insoweit bezeichnet eine Längsschwingung der Windenergieanlage, wie dem Fachmann hinlänglich bekannt ist, eine Schwingung des Turms mit der Gondel in axialer Richtung der Rotorachse. Mit anderen Worten schwingt die Windenergieanlage vor und zurück, also wenn sie in den Wind ausgerichtet ist, zum Wind hin und vom Wind weg, also in Windrichtung, was als Längsschwingung bezeichnet wird.

Solche Längsschwingungen können gedämpft werden, indem die Blattwinkel der Rotorblätter etwas verstellt werden. Vereinfacht und anschaulich ausgedrückt können die Rotorblätter etwa in Richtung in Fahnenstellung verdreht werden, wenn die Anlage gerade mit dem Wind schwingt, um dadurch etwas weniger Angriffsfläche für den Wind zu bieten und damit weniger in diese Schwingrichtung durch den Wind geschoben zu werden. Schwingt die Anlage zurück, also gegen den Wind, können die Rotorblätter wieder etwas von der Fahnenstellung weggedreht werden, also so, dass sie etwas mehr Widerstand dem Wind bieten, so dass der Wind die Bewegung in dieser Richtung entgegen der Windrichtung abbremst.

Es wurde erkannt, dass im Falle einer drohenden Überdrehzahl die Drehzahlregelung hohe Priorität hat, um die Überdrehzahl zu verhindern. Die Dämpfungsregelung gegen die Längsschwingung könnte die Effektivität der Drehzahlregelung abschwächen, so dass vorgeschlagen wird, dass dann, wenn eine Überdrehzahl prädiziert wurde, die Dämpfungsregelung zu verändern, insbesondere zumindest abzuschwächen oder sogar zu deaktivieren.

Dazu kommt in Frage, dass die Dämpfungsregelung derart verändert wird, dass eine Verstärkung der Dämpfungsregelung verringert wird. Als weitere oder alternative Möglichkeit kann die Dämpfungsregelung derart verändert werden, dass sie deaktiviert wird. Wird das mit der Verringerung der Verstärkung kombiniert, kann das bedeuten, dass zunächst die Verstärkung verringert wird, und im Anschluss die Dämpfungsregelung deaktiviert wird. Die Dämpfungsregelung kann aber auch sofort deaktiviert werden, wenn eine Überdrehzahl prädiziert wurde. Es kommt auch in Betracht, dass die Dämpfungsregelung dadurch deaktiviert wird, dass eine Verstärkung der Dämpfungsregelung auf null eingestellt wird.

Außerdem oder alternativ kommt in Betracht, dass ein Verstellen der Rotorblätter in ihren Blattwinkeln durch die Dämpfungsregelung nur in Richtung hin zu einer Fahnenstellung zugelassen wird. Hier wurde besonders erkannt, dass das Verstellen der Rotorblätter in Richtung hin zu einer Fahnenstellung die Drehzahl reduziert und insoweit ein solcher Teil der Dämpfungsregelung die Drehzahlregelung bei der Aufgabe, der Überhöhung der Drehzahl entgegenzuwirken, unterstützt.

Gemäß einem Aspekt wird vorgeschlagen, dass das Verändern der Drehzahlregelung erst um eine vorbestimmbare Verlängerungszeit nach dem Zeitpunkt vollständig aufgehoben wird, zudem eine Überdrehzahl nicht mehr prädiziert wird, wobei die vorbestimmbare Verlängerungszeit, insbesondere im Bereich von ein bis zehn Sekunden, insbesondere im Bereich von 2 bis 5 Sekunden liegt.

Grundsätzlich ist eine Drehzahlregelung für den normalen Betrieb ausgelegt und sollte auch in der ausgelegten Parametrierung verwendet werden. Besonders das Erhöhen der Verstärkung der Drehzahlregelung ist für einen Dauerbetrieb nicht optimal, da es - je nach Auslegung und Randbedingung - auch Schwingungen verstärken könnte und/oder zu einer erhöhten, die Anlage belastenden Verstellaktivität der Rotorblätter führen kann. Dennoch wurde erkannt, dass die Verlängerung der Zeit, in der die Verstärkung der Drehzahlregelung erhöht ist, vergleichsweise kurz ist, so dass weder nennenswerte Schwingungsprobleme auftreten können, noch eine dauerbelastende erhöhte Stellaktivität auftritt. Somit ist es möglich und sinnvoll, die Drehzahlregelung noch etwas länger verändert zu lassen, bis eine Überdrehzahl nicht mehr prädiziert wird, die Anlage also wieder zurück im sicheren Betrieb ist.

Gemäß Anspruch 9 wird auch eine Windenergieanlage vorgeschlagen. Die Windenergieanlage weist in ihrem Blattwinkel verstellbare Rotorblätter auf und ist unter Verwendung einer Drehzahlregelung mit einer variablen Drehzahl betreibbar. Die Drehzahlregelung ist dazu vorbereitet, die Drehzahl auf einen veränderlichen Sollwert zu regeln. Die Windenergieanlage ist dazu vorbereitet, folgende Schritte auszuführen.

Ein Schritt ist das Auswerten eines Prüfkriteriums zum Prädizieren einer aufkommenden Überdrehzahl. Ein weiterer Schritt ist das Prädizieren einer Überdrehzahl in Abhängigkeit von dem wenigstens einen Prüfkriterium, und ein noch weiterer Schritt ist das Verändern der Drehzahlregelung, wenn eine Überdrehzahl prädiziert wurde.

Besonders wird vorgeschlagen, dass die Windenergieanlage eine Anlagensteuereinheit aufweist, um die Windenergieanlage zu steuern, und dass die Windenergieanlage, insbesondere diese Anlagensteuereinheit dazu vorbereitet ist, ein Verfahren gemäß einer der vorstehend erläuterten Aspekte auszuführen. Dazu kann die Drehzahlregelung in der Anlagensteuereinheit implementiert sein. Außerdem kann ein Auswertealgorithmus in der Anlagensteuereinheit implementiert sein, um das Prüfkriterium auszuwerten und auch die Überdrehzahl davon abhängig zu prädizieren. Dafür können entsprechende Algorithmen gemäß den erläuterten Aspekten in einem Prozessrechner der Anlagensteuereinheit implementiert sein. Zur Erfassung der Drehzahl können in der Windenergieanlage ohnehin üblicherweise vorhandene Sensoren verwendet werden bzw. ein ohnehin in einer Windenergieanlage verwendetes Drehzahlsignal, das die aktuelle Drehzahl wiedergibt, kann verwendet werden.

Die Windenergieanlage arbeitet somit wie oben im Zusammenhang mit Aspekten des Verfahrens erläutert wurde.

Die Erfindung wird nachfolgend beispielhaft unter Bezugnahme auf die begleitenden Figuren näher erläutert.

**Figur 1** zeigt eine Windenergieanlage in einer perspektivischen Ansicht.

**Figur 2** zeigt ein Diagramm zur Veranschaulichung einer Überdrehzahlprädiktion.

**Figur 3** zeigt schematisch eine Regelungsstruktur mit einer Drehzahlregelung und einer Winkelauswertung.

**Figur 4** zeigt schematisch eine Struktur mit einer Drehzahlregelung und einer Längsdämpfungsregelung.

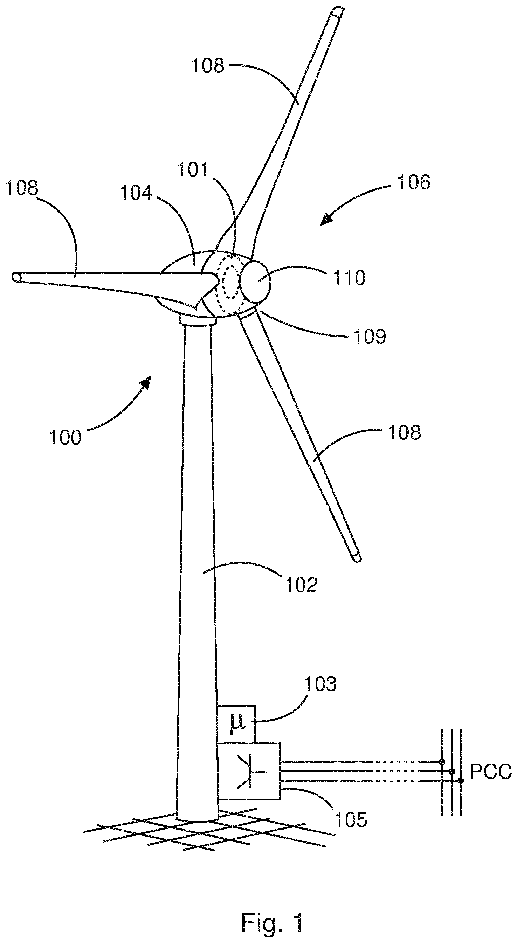

**Figur 1** zeigt eine schematische Darstellung einer Windenergieanlage gemäß der Erfindung. Die Windenergieanlage 100 weist einen Turm 102 und eine Gondel 104 auf dem Turm 102 auf. An der Gondel 104 ist ein aerodynamischer Rotor 106 mit drei Rotorblättern 108 und einem Spinner 110 vorgesehen. Der aerodynamische Rotor 106 wird im Betrieb der Windenergieanlage durch den Wind in eine Drehbewegung versetzt und dreht somit auch einen elektrodynamischen Rotor oder Läufer eines Generators, welcher direkt oder indirekt mit dem aerodynamischen Rotor 106 gekoppelt ist. Der elektrische Generator ist in der Gondel 104 angeordnet und erzeugt elektrische Energie. Die Pitchwinkel der Rotorblätter 108 können durch Pitchmotoren an den Rotorblattwurzeln 109 der jeweiligen Rotorblätter 108 verändert werden.]

Die Windenergieanlage 100 weist dabei einen elektrischen Generator 101 auf, der in der Gondel 104 angedeutet ist. Mittels des Generators 101 kann elektrische Leistung erzeugt werden. Zum Einspeisen elektrischer Leistung ist eine Einspeiseeinheit 105 vorgesehen, die besonders als Wechselrichter ausgebildet sein kann. Damit kann ein dreiphasiger Einspeisestrom und/oder eine dreiphasige Einspeisespannung nach Amplitude, Frequenz und Phase erzeugt werden, zum Einspeisen an einem Netzanschlusspunkt PCC. Das kann direkt oder auch gemeinsam mit weiteren Windenergieanlagen in einem Windpark erfolgen. Zum Steuern der Windenergieanlage 100 und auch der Einspeiseeinheit 105 ist eine Anlagensteuerung 103 vorgesehen. Die Anlagensteuerung 103 kann auch Vorgabewerte von extern, insbesondere von einem zentralen Parkrechner erhalten.

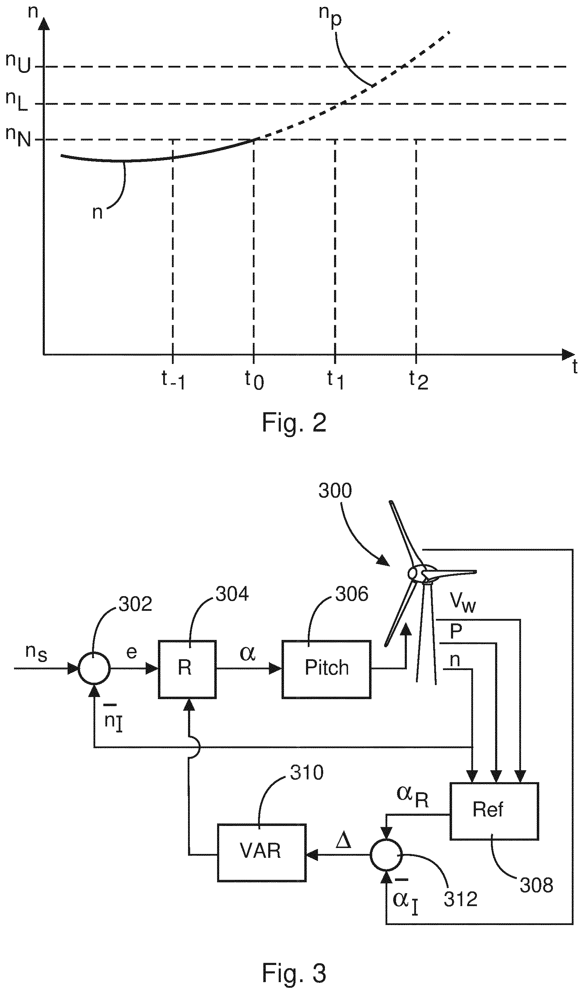

**Figur 2** zeigt ein Diagramm zur Veranschaulichung einer Drehzahlprädiktion mittels eines Drehzahlverlaufs und damit auch eine Prädiktion, ob eine Überdrehzahl zu erwarten ist. An der Abszisse ist die Zeit aufgetragen, an der Ordinate die Drehzahl.

Als relevante zu berücksichtigende Drehzahlwerte sind eine Nenndrehzahl $n_N$, eine Grenzdrehzahl $n_L$ und eine Überdrehzahl $n_U$ eingezeichnet, wobei die Nenndrehzahl $n_N$ auch repräsentativ für andere Solldrehzahlen steht. In dem Diagramm ist die Drehzahl n durch eine durchgezogene Linie als Drehzahlverlauf dargestellt und dieser Verlauf wird zumindest vom Zeitpunkt $t_{-1}$ bis zum aktuellen Zeitpunkt $t_0$ aufgenommen. Es können zwischen diesen beiden Zeitpunkten $t_{-1}$ und $t_0$ mehrere Werte aufgenommen werden, nicht nur zu den beiden eingezeichneten Zeiten. Der Zeitpunkt $t_0$ gibt somit die aktuelle Zeit an, zu der die Messung und Auswertung durchgeführt wird.

Der Drehzahlverlauf setzt sich mit einer gestrichelten Linie fort, die einen extrapolierten Drehzahlverlauf $n_P$ darstellt.

Zum Zeitpunkt $t_0$ werden also die bis dahin aufgenommenen Drehzahlwerte, insbesondere von dem Zeitpunkt $t_{-1}$ an ausgewertet und daraus der extrapolierte Drehzahlverlauf $n_P$ bestimmt. Es kann aus den aufgenommenen Drehzahlwerten beispielsweise eine Drehzahlfunktion n(t) als Funktion in Abhängigkeit von der Zeit durch eine Polynomfunktion bestimmt werden. Die Extrapolation erfolgt bis zum Prüfzeitpunkt $t_2$. Die Extrapolation kann bspw. linear erfolgen, oder, was in Figur 2 angedeutet ist, über die Annahme eines quadratischen Verlaufs, was in Figur 2 aber nicht exakt dargestellt ist, sondern nur angedeutet ist.

In der Figur 2 erreicht der Drehzahlverlauf zum Zeitpunkt $t_0$ die Nenndrehzahl. Das ist aber keine Voraussetzung, und vielmehr erfolgt eine Überwachung ständig, unabhängig davon, welchen Wert die Drehzahl bzw. der Drehzahlverlauf erreicht haben. Allerdings kann vorgesehen sein, dass eine Veränderung der Drehzahlregelung erst erfolgt, wenn die Drehzahl wenigstens 90% oder wenigstens 100% der Solldrehzahl, hier also der Nenndrehzahl, erreicht hat.

Eine Möglichkeit der Auswertung besteht nun darin, zu prüfen, ob zum Prüfzeitpunkt $t_2$ der extrapolierte Drehzahlverlauf den Wert der Überdrehzahl $n_U$ erreicht hat. Im dargestellten Fall ist das so, weil nämlich die oberste gestrichelte Linie, die für die Überdrehzahl $n_U$ steht, kurz vor Erreichen des Prüfzeitpunktes $t_2$ erreicht und dann überschritten wird.

Eine andere Möglichkeit der Prüfung besteht darin, zu prüfen, ob zu einem früheren Zeitpunkt, nämlich dem vorgebbaren Vorprüfzeitpunkt $t_1$ die Grenzdrehzahl $n_L$ erreicht ist. Auch das ist im vorliegenden Beispiel der Fall, so dass auch diese Prüfung zu dem Ergebnis kommt, dass eine Überdrehzahl zu erwarten ist.

Weitere Möglichkeiten der Auswertung sind weiter oben ebenfalls beschrieben worden und sollen durch diese beispielhafte Darstellung der Figur 2 nicht ausgeschlossen werden.

**Figur 3** zeigt eine Struktur einer Drehzahlregelung, die auf eine symbolisch dargestellte Windenergieanlage 300 angewendet wird. Außerdem ist eine Winkelauswertung dargestellt.

Die vereinfacht dargestellte Drehzahlregelung erfolgt so, dass von einer Solldrehzahl $n_S$ eine Ist-Drehzahl $n_I$ in der ersten Summierstelle 302 abgezogen wird. Das Ergebnis ist eine Regelabweichung e, die auf den Regler 304 gegeben wird. Der Regler 304 kann ein PI-Regler sein, der einen Blattwinkel $\alpha$ ausgibt, der auch dann nicht null wird, wenn der Regelfehler e null wird. Dieser Regler dient in Figur 3 aber nur der Veranschaulichung. Viel häufiger wird ein Regler verwendet, der keinen Blattwinkel, sondern eine Verstellrate für den Blattwinkel ausgibt. Ein solcher Regler, der in Abhängigkeit von dem Regelfehler e eine Verstellrate ausgibt, könnte als reiner P-Regler ausgebildet sein. Die Verwendung eines Reglers, der als Stellgröße einen Blattwinkel $\alpha$ ausgibt, ist lediglich zur Veranschaulichung gewählt worden.

Jedenfalls wird der Blattwinkel $\alpha$ dann dem Stellglied 306 zugeführt, dass die Verstellung der Rotorblätter umsetzt. Bei Vorgabe einer Verstellrate würde entsprechend diese in das Stellglied gegeben werden. Das Stellglied 306 verstellt insbesondere alle drei Rotorblätter der Windenergieanlage 300, denn üblicherweise weisen Windenergieanlagen heutzutage drei Rotorblätter auf.

Es stellt sich dann entsprechend eine Drehzahl n ein, die gemessen und zurückgeführt werden kann, wodurch sich der Drehzahlregelkreis schließt.

Es wird nun vorgeschlagen, dass zur Prädiktion, ob eine aufkommende Überdrehzahl zu erwarten ist, also um eine Überdrehzahl zu prädizieren, ein Referenzblattwinkel $\alpha_R$ bestimmt wird. Dieser Referenzblattwinkel $\alpha_R$ wird in dem Referenzblock 308 bestimmt. Der Referenzblock 308 erhält dafür als Eingangsgrößen die aktuelle Drehzahl n, die aktuelle Leistung P, also insbesondere die aktuell erzeugte Leistung, und die aktuelle Windgeschwindigkeit $v_W$. Diese drei Größen geben im Wesentlichen den aktuellen Betriebspunkt wieder und dem kann ein Referenzwinkel, also Referenzblattwinkel, zugeordnet werden. Diese Zuordnung ist in dem Referenzblock 308 hinterlegt, z.B. als mehrdimensionale Tabelle, oder auch als Funktion, so dass der Referenzblock 308 zu dem aktuellen Betriebspunkt den Referenzblattwinkel $\alpha_R$ bestimmen kann, insbesondere den Idealblattwinkel. Im Übrigen ist aus darstellerischen Gründen die aktuell erfasste Drehzahl am Ausgang der Windenergieanlage 300 als n, am Eingang der ersten Summierstelle 302, aber als $n_I$ bezeichnet. Diese beiden Größen sind aber identisch.

Von dem so bestimmten Referenzblattwinkel $\alpha_R$, der insoweit einen Idealwinkel darstellt, wird der tatsächlich erfasste Blattwinkel $\alpha_I$ in der zweiten Summierstelle 312 abgezogen. Die Differenz $\Delta$ wird in den Variationsblock 310 eingegeben. Der Variationsblock entscheidet in Abhängigkeit von der eingegebenen Differenz $\Delta$ der beiden Blattwinkel, ob eine Überdrehzahl droht. Ist das der Fall, berechnet der Variationsblock 310 zudem eine vorzunehmende Variation des Drehzahlreglers der Höhe nach. Je größer also die Abweichung der beiden Blattwinkel ist, nämlich dem Betrage nach, umso größer ist auch die Variation, die durchgeführt werden kann.

In einem einfachen Beispiel verändert dann der Variationsblock 310 eine Reglerverstärkung in dem Regler 304. Im Falle eines anzunehmenden PI-Reglers kann dies besonders der Proportionalanteil des Reglers sein, der in Abhängigkeit von der Abweichung der beiden Blattwinkel erhöht wird. Im Falle eines reinen P-Reglers, bei dem eine Verstellrate für den Blattwinkel ausgegeben wird, kann auch in Betracht kommen, dass die einzige Verstärkung, die ein solcher Regler haben kann, entsprechend verändert wird.

Vorsorglich wird darauf hingewiesen, dass gemäß der Darstellung der Figur 3 im Falle einer starken Blattwinkelabweichung, die auf eine Überdrehzahl hindeutet, der erfasste Blattwinkel $\alpha_I$ größer ist als der Referenzblattwinkel $\alpha_R$. In diesem relevanten Fall ist dann also zunächst die Abweichung $\Delta$ am Ausgang der zweiten Summierstelle 312 negativ. Zur Vereinfachung der Berechnung kommt in Betracht, dass dieser negative Wert in dem Variationsblock 310 durch einen Invertierer in seine Vorzeichen geändert wird. Dann kann die Berechnung einer Reglerveränderung auf einem solchen positiven Wert vorgenommen werden. Es können auch die Eingänge an der Summierstelle 312 getauscht werden.

Es kommt aber auch in Betracht, dass zusätzlich eine Überdrehzahlprädiktion basierend auf einem extrapolierten Drehzahlverlauf vorgenommen wird, wie in Figur 2 dargestellt wird. Eine Möglichkeit der Kombination besteht darin, dass über den extrapolierten Drehzahlverlauf gemäß Figur 2 festgestellt wird, ob überhaupt von einer Überdrehzahl auszugehen ist, und dann die Höhe von der Blattwinkelabweichung abhängig davon bestimmt wird, welchen Wert die zweite Summierstelle 312 als Abweichung $\Delta$ ausgibt.

Es kommt aber auch in Betracht, dass sowohl in Abhängigkeit von dem extrapolierten Drehzahlverlauf eine Reglerverstärkungsveränderung berechnet wird, und außerdem in Abhängigkeit von der Abweichung zwischen Referenzblattwinkel $\alpha_R$ und aktuellem Blattwinkel $\alpha_I$, wie in Figur 3 gezeigt ist. Beide so berechneten Werte können zur Reglerveränderung, insbesondere zur Veränderung einer Reglerverstärkung, über eine Gewichtung zusammengeführt werden. Beispielsweise können beide Berechnungen jeweils mit 0,5 multipliziert und das Ergebnis aufaddiert werden, so dass sich der Wert ergibt, um den der Regler verstellt werden soll.

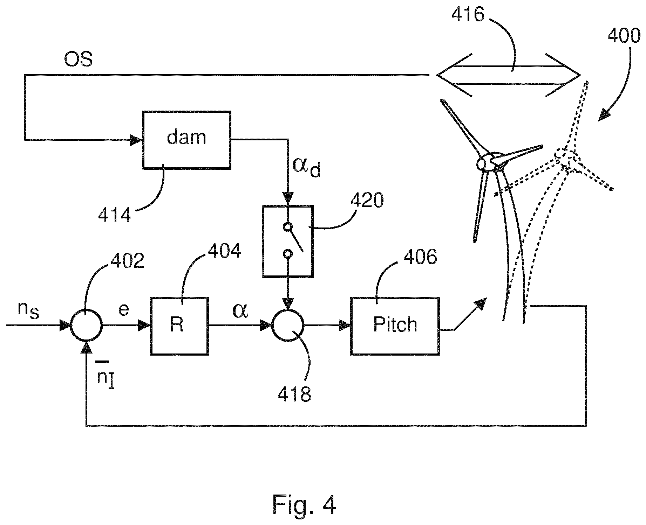

**Figur 4** veranschaulicht in der gezeigten Struktur eine Berücksichtigung einer Längsdämpfungsregelung. Die Längsdämpfungsregelung verwendet einen Längsdämpfungsregler 414, der in Abhängigkeit von einer Längsschwingung OS einen Dämpfungsblattwinkel $\alpha_d$ ausgibt. Auch in der Darstellung der Struktur der Figur 4 ist die Vorgabe eines unmittelbaren Blattwinkels sowohl für den Längsdämpfungsregler 414 als auch den Drehzahlregler nur zum Zwecke der Veranschaulichung gewählt worden. Hier kommt sowohl für den Längsdämpfungsregler 414 als auch den Drehzahlregler in Betracht, dass eine Verstellrate für den Blattwinkel ausgegeben wird.

Jedenfalls sind die Längsschwingungen in Figur 3 symbolisch durch die beiden Positionen der Windenergieanlage 400 veranschaulicht. In der überzogenen Darstellung ist somit die Längsschwingung der Windenergieanlage 400 durch den Schwingungspfeil 416 veranschaulicht.

In dieser Struktur der Figur 4 ist ebenfalls eine Drehzahlregelung angedeutet, nämlich auf die gleiche Art und Weise wie in Figur 3. Auch die Erläuterung zur Vereinfachung, dass ein Blattwinkel statt einer Verstellrate ausgegeben wird, gilt zur Figur 4 entsprechend.

Jedenfalls erfolgt auch bei dieser Drehzahlregelung eine Differenzbildung zwischen SollDrehzahl $n_S$ und der Ist-Drehzahl $n_I$ in der ersten Summierstelle 402. Der Regelfehler e wird auf den Regler 404 gegeben, der einen Blattwinkel $\alpha$ als Stellgröße ausgibt, in einer Variation würde eine Verstellrate ausgegeben werden.

Der Blattwinkel $\alpha$ wird im Grunde dem Stellglied 406 zugeführt. Das Stellglied 406 führt dann die Verstellung der Rotorblätter entsprechend durch.

Zusätzlich kann aber ein Blattwinkel $\alpha_d$ auf der zweiten Summierstelle 418 aufgeschaltet werden. Im Falle einer Regelung über Verstellraten würden dort Verstellraten aufaddiert werden, nämlich vom Drehzahlregler einerseits und von dem Längsdämpfungsregler 414 andererseits. Die Längsdämpfungsregelung kann durch den Aktivierblock 420 aufgeschaltet werden.

Es wird vorgeschlagen, dass für den Fall einer erwarteten Überdrehzahl das Aufaddieren eines solchen Dämpfungsblattwinkels $\alpha_d$ verhindert wird. Das ist durch einen geöffneten Schalter in dem Aktivierblock 420 symbolisiert. Der Aktivierblock 420 kann natürlich als Recheneinheit ausgeführt sein, die so programmiert werden kann, dass sie einen Dämpfungsblattwinkel $\alpha_d$ ausgibt oder auch nicht ausgibt. Es kommt auch in Betracht, dass der Dämpfungsblattwinkel $\alpha_d$ zur Weitergabe an die zweite Summierstelle 418 verringert wird, statt ganz auf null gesetzt zu werden. Es kommt auch in Betracht, dass in dem Aktivierblock 420 unterschieden wird, ob der Dämpfungsblattwinkel $\alpha_d$ positiv oder negativ aufzuschalten ist. Ist er positiv aufzuschalten, kann er weitergeleitet und dann tatsächlich aufgeschaltet werden, nämlich in der zweiten Summierstelle 418. Ist er negativ, kann die Aufschaltung unterdrückt werden.

Dadurch wird gewährleistet, dass ein großer Blattwinkel oder eine große Blattwinkelverstellrate, die von dem Drehzahlregler durch den Regler 404 vorgegeben wird, nicht durch die Längsdämpfungsregelung abgeschwächt wird, oder nicht zu stark abgeschwächt wird, wenn eine Überdrehzahl prädiziert wurde.

Die Erfindung beruht zudem auf folgenden Überlegungen bzw. schlägt die folgenden Aspekte vor.

Es wurden folgende Kriterien bzw. Aspekte zur Detektion kritischer Ereignisse bezüglich Überdrehzahl gefunden.

Eine Möglichkeit ist die Verwendung einer Extrapolation.

Es wurde erkannt, dass Zeitreihen von Drehzahlwerten eine kritische Situation frühzeitig aufzeigen können. Denn solche Drehzahlanstiegsgeschwindigkeiten sind vor Überdrehzahlen häufig sehr groß gewesen, obwohl die Drehzahl selbst auch bereits kritisch, also in der Nähe der Überdrehzahl war. Schnelle Drehzahlanstiege sind bei großen Drehzahlabweichungen gegenüber dem Sollwert, also in der Nähe von Überdrehzahlen, problematisch, bei kleinen Abweichungen, insbesondere bei Unterdrehzahlen, allerdings kein Problem.

Daher wurde erkannt, und daher vorgeschlagen, dass es hilfreich sein könnte, sowohl die Drehzahl, als auch ihre Entwicklung/Historie/Anstiegsgeschwindigkeit in eine frühe Erkennung mit einzubeziehen. Als neues Kriterium für kritische Überdrehzahlsituationen wurde daher vorgeschlagen, die Ist-Drehzahl, insbesondere gefiltert, mit ihrer aktuellen Anstiegsgeschwindigkeit für einen zukünftigen Zeitraum zu extrapolieren. Als Prädiktionshorizont wird vorgeschlagen, typische Zeiträume für Windereignisse und eine Dynamik einer Windenergieanlage (2-5 Sekunden) zu verwenden.

In Abhängigkeit von dieser extrapolierten Drehzahl werden nun die Drehzahlreglerverstärkungen angepasst. Diese Anpassungen können über kontinuierliche Zusammenhänge durchgeführt werden, oder über Stufen, was besonders aus praktischen Gründen gewählt werden kann. Es kann die Anpassung auch nicht nur als Funktion der extrapolierten Drehzahl stattfinden. Vielmehr kann der Abstand der extrapolierten Drehzahl bis zur Abschaltschwelle beim leistungsoptimalen Betrieb als Kriterium verwendet oder berücksichtigt werden bzw. es kann eine Überdrehzahlgrenze für schallreduzierte Modi als Kriterium verwendet oder berücksichtigt werden, also wie weit die Drehzahl von einer Abschaltung entfernt ist. Außerdem kann als Zusatzkriterium noch eine Drehzahlschwelle berücksichtigt werden.

Alternativ oder ergänzend kann ein Idealblattwinkel berücksichtigt werden.

Besonders kann die Umsetzung der Berücksichtigung des Drehzahlverlaufs, besonders des extrapolierten Drehzahlverlaufs eine deutliche Verbesserung bringen, die aber noch weiter verbessert werden kann. Die Verwendung eines Idealblattwinkels kann durch entsprechenden Vergleich mit dem erfassten Blattwinkel eine zu träge Regelung innerhalb sehr kurzer Zeit erkennen. Neben der Extrapolation, oder dazu alternativ, wird deshalb ein zweites Kriterium zur Erkennung seltener kritischen Überdrehzahlen vorgeschlagen. In Abhängigkeit einer solchen Schieflage als Differenz zwischen dem Idealblattwinkel und dem erfassten Blattwinkel kann nun ebenfalls die Drehzahlregelung verstärkt werden. Das kann in Stufen oder kontinuierlich erfolgen. Vorteilhaft wäre hier auch eine Vorsteuerung, also eine Vorgabe eines einzustellenden Blattwinkels außerhalb einer Drehzahlregelungsschleife, da der einzustellende Blattwinkel mit dem Idealblattwinkel bekannt ist.

Es werden noch die weiteren möglichen Kriterien vorgeschlagen.

Des Weiteren wird vorgeschlagen, dass die aerodynamische Leistung, also die Generatorleistung zuzüglich der Beschleunigungsleistung oder nur die Beschleunigungsleistung, als Kriterium herangezogen werden, um über die Trägheit den Zeitpunkt des Überschreitens der Überdrehzahlschwelle zu prädizieren, unter der Annahme konstanter Bedingungen.

Praktisch ist dies ganz ähnlich zur Verwendung der extrapolierten Drehzahl. Sobald diese die Abschaltschwelle erreicht, würde man nach Überschreitung der Prädiktionsdauer eine Abschaltung erwarten, bei gleichbleibenden Bedingungen.

Als Reaktion auf kritische Ereignisse, also auf eine erwartete Überdrehzahl, werden folgende Maßnahmen vorgeschlagen.

Eine erste Maßnahme ist ein Verändern der Reglerverstärkung

Wie bereits beschrieben werden die Drehzahlreglerparameter temporär erhöht, solange das kritische Ereignis durch die Extrapolation vorhergesagt wird.

Eine Maßnahme ist die Drosselung einer Turmdämpfung

Eine weitere genaue Analyse hat ergeben, dass Windrampen, also eine zeitlich ansteigende, insbesondere schnell und rampenförmig ansteigende Windgeschwindigkeit, so lange anhalten, dass der Turm nicht nur nach hinten schwingt, sondern im Anschluss auch wieder nach vorne. Aktive Turmdämpfungen möchten diese Schwingung nach vorne dämpfen, indem sie rein pitchen also die Blätter in eine Richtung verstellen, die zu einer Leistungszunahme führt. Dies ist aber für eine potenzielle Überdrehzahlsituation ungünstig, sodass das Reinpitchen durch die Turmdämpfungsverfahren in Abhängigkeit des oben genannten Verfahrens in kritischen Überdrehzahlsituationen verhindert wird. Das kann kontinuierlich, oder wie in Stufen erfolgen. Zusätzliches Rauspitchen, durch die Turmdämpfung also eine Blattverstellung in die entgegengesetzte Richtung, nämlich in Richtung zu einer Fahnenstellung hin, ist gemäß einem Vorschlag jedoch weiterhin erlaubt, da es sowohl für den Turm, als auch für die Drehzahl positiv ist.

Sollte eine kritische Situation erkannt worden sein, so wird diese Reaktion mindestens für eine gewisse Dauer beibehalten, auch wenn die kritische Situation nicht mehr vorliegt. Für diese Dauer wird vorgeschlagen, eine typische Dauer einer Turmschwingung zu wählen, nämlich insbesondere eine Dauer von 3 bis 8 Sekunden.

Wie oben beschrieben wäre eine weitere zusätzliche oder alternative Maßnahme eine Vorsteuerung auf den Idealblattwinkel.

Es wird als eine Maßnahme somit ein direktes Einstellen oder Anfahren der Blattwinkel auf den Wert des Idealblattwinkels vorgeschlagen.

**Patentansprüche**

1. Verfahren zum Steuern einer Windenergieanlage (100), die in ihrem Blattwinkel verstellbare Rotorblätter (108) aufweist und unter Verwendung einer Drehzahlregelung mit einer variablen Drehzahl betreibbar ist, wobei

   - die Drehzahlregelung vorbereitet ist, die Drehzahl auf einen veränderlichen Drehzahlsollwert zu regeln, umfassend die Schritte:

     - Auswerten eines Prüfkriteriums zum Prädizieren einer aufkommenden Überdrehzahl,

- Prädizieren einer Überdrehzahl ($n_U$) in Abhängigkeit von dem wenigstens einen Prüfkriterium, und
- Verändern der Drehzahlregelung, wenn eine Überdrehzahl ($n_U$) prädiziert wurde, wobei
- die Veränderung der Drehzahlregelung so erfolgt, dass eine Reglerverstärkung der Drehzahlregelung (304) erhöht wird, wenn eine Überdrehzahl ($n_U$) prädiziert wurde,
- eine Drehzahlregelung unter Verwendung einer Blattwinkelverstellung vorgesehen ist, bei der der Blattwinkel in Abhängigkeit von der Drehzahl verändert wird, und
- eine Überdrehzahl ($n_U$) prädiziert wird, wenn der Blattwinkel um einen vorgebbaren Differenzblattwinkel von einem veränderlichen Referenzblattwinkel ($\alpha_R$) abweicht.

2. Verfahren nach Anspruch 1, **dadurch gekennzeichnet, dass**

- eine Überdrehzahl ($n_U$) eine Drehzahl bezeichnet, die einen Drehzahlgrenzwert erreicht oder überschreitet, der um einen Mindestüberschreitungswert über einer Solldrehzahl insbesondere einer Nenndrehzahl liegt, wobei insbesondere
- der Mindestüberschreitungswert wenigstens 5%, vorzugsweise wenigstens 10%, insbesondere wenigstens 15% der Solldrehzahl beträgt, und/oder
- das Verändern der Drehzahlregelung durchgeführt oder begonnen wird, bevor die Drehzahl den Drehzahlgrenzwert erreicht, insbesondere bevor die Drehzahl einen Wert von 97% des Drehzahlgrenzwertes erreicht und/oder
- das Verändern der Drehzahlregelung nur durchgeführt oder begonnen wird, wenn die Drehzahl über 90%, insbesondere über 100% der Solldrehzahl bzw. Nenndrehzahl liegt.

3. Verfahren nach Anspruch 1 oder 2, **dadurch gekennzeichnet, dass**

- zum Prädizieren einer aufkommenden Überdrehzahl ($n_U$) ein Drehzahlverlauf als zeitlicher Verlauf der Drehzahl bis zu einem aktuellen Zeitpunkt aufgenommen und insbesondere über den aktuellen Zeitpunkt hinaus zu einem Prüfzeitpunkt ($t_2$) extrapoliert wird, und
- eine aufkommende Überdrehzahl prädiziert wird, wenn
- der Drehzahlverlauf bis zum Prüfzeitpunkt ($t_2$) einen Drehzahlanstieg aufweist, der über einem vorgebbaren Anstiegsgrenzwert liegt, und/oder
- der Drehzahlverlauf eine mit der Zeit zunehmende Steigung aufweist, und/oder

- der extrapolierte Drehzahlverlauf bis zum Prüfzeitpunkt ($t_2$) Überdrehzahl ($n_U$) erreicht und/oder
- der extrapolierte Drehzahlverlauf vor Erreichen des Prüfzeitpunktes ($t_2$), insbesondere zu einem vorgebbaren Vorprüfzeitpunkt ($t_1$), eine Grenzdrehzahl ($n_L$) überschreitet, die kleiner als die Überdrehzahl ($n_U$) ist.

4. Verfahren nach einem der vorstehenden Ansprüche, **dadurch gekennzeichnet, dass**

- ein quantitatives Verändern der Drehzahlregelung, insbesondere ein bzw. das Erhöhen einer Reglerverstärkung, in Abhängigkeit von einem bzw. dem extrapolierten Drehzahlverlauf erfolgt, insbesondere so, dass
- das quantitative Verändern in Abhängigkeit von einem Betrag eines bzw. des Drehzahlanstiegs erfolgt, und/oder
- das quantitative Verändern in Abhängigkeit von einem Abstand der Drehzahl oder des extrapolierten Drehzahlverlaufs von der Grenzdrehzahl ($n_L$) oder einem Drehzahlschwellwert erfolgt, der kleiner als die Grenzdrehzahl ($n_L$) ist, und größer als eine bzw. die Solldrehzahl bzw. Nenndrehzahl,

insbesondere erfolgt das quantitative Verändern der Drehzahlregelung so, dass

- die Reglerverstärkung umso stärker erhöht wird,
- je größer ein Drehzahlanstieg des extrapolierten Drehzahlverlaufs ist, und/oder
- je näher der extrapolierte Drehzahlverlauf der Grenzdrehzahl ($n_L$) kommt.

5. Verfahren nach einem der vorstehenden Ansprüche, **dadurch gekennzeichnet, dass**

- als Referenzblattwinkel ($\alpha_R$) ein Idealblattwinkel vorgegeben wird, und
- der Idealblattwinkel einen Blattwinkel beschreibt, der zu einem aktuellen Betriebspunkt unter stationären Bedingungen zu einer konstanten Drehzahl führt, wobei insbesondere
- der aktuelle Betriebspunkt durch einen aktuellen Drehzahlwert, eine aktuelle Generatorleistung und eine aktuelle Windgeschwindigkeit gekennzeichnet ist.

6. Verfahren nach einem der vorstehenden Ansprüche, **dadurch gekennzeichnet, dass**

- ein quantitatives Verändern der Drehzahlregelung, insbesondere ein bzw. das Erhöhen einer bzw. der Reglerverstärkung, in Abhängigkeit von einem Betrag einer bzw. der Blattwinkelabweichung erfolgt, um die der Blattwinkel von einem bzw. dem veränderlichen Referenzblattwinkel ($\alpha_R$) abweicht, insbesondere so, dass

- die Reglerverstärkung erhöht wird, wenn die Blattwinkelabweichung einen vorbestimmten Mindestabweichungswert überschreitet und/oder
- die Reglerverstärkung umso stärker erhöht wird, je größer die Blattwinkelabweichung ist.

7. Verfahren nach einem der vorstehenden Ansprüche, **dadurch gekennzeichnet, dass**

- eine Dämpfungsregelung vorgesehen ist, die eine von einer erfassten Längsschwingung der Windenergieanlage abhängige Veränderung des Blattwinkels aufweist, um die Längsschwingung zu dämpfen, und
- die Dämpfungsregelung verändert wird, wenn eine Überdrehzahl ($n_U$) prädiziert wurde insbesondere

- eine Verstärkung der Dämpfungsregelung verringert wird,
- die Dämpfungsregelung deaktiviert wird, und/oder
- ein Verstellen der Rotorblätter (108) in ihren Blattwinkeln durch die Dämpfungsregelung nur in Richtung hin zu einer Fahnenstellung zugelassen wird.

8. Verfahren nach einem der vorstehenden Ansprüche, **dadurch gekennzeichnet, dass**

- das Verändern der Drehzahlregelung erst um eine vorbestimmbare Verlängerungszeit nach dem Zeitpunkt vollständig aufgehoben wird, zu dem eine Überdrehzahl nicht mehr prädiziert wird, wobei
- die vorbestimmbare Verlängerungszeit insbesondere im Bereich von 1 bis 10 Sekunden, insbesondere im Bereich von 2 bis 5 Sekunden liegt.

9. Windenergieanlage (100), die in ihrem Blattwinkel verstellbare Rotorblätter (108) aufweist und unter Verwendung einer Drehzahlregelung mit einer variablen Drehzahl betreibbar ist, wobei

- die Drehzahlregelung vorbereitet ist, die Drehzahl auf einen veränderlichen Drehzahlsollwert zu regeln, und
- die Windenergieanlage (100) dazu vorbereitet ist, Schritte auszuführen, umfassend:

- Auswerten eines Prüfkriteriums zum Prädizieren einer aufkommenden Überdrehzahl,
- Prädizieren einer Überdrehzahl ($n_U$) in Abhängigkeit von dem wenigstens einen Prüfkriterium, und
- Verändern der Drehzahlregelung, wenn eine Überdrehzahl ($n_U$) prädiziert wurde, wobei
- die Veränderung der Drehzahlregelung so erfolgt, dass eine Reglerverstärkung der Drehzahlregelung (304) erhöht wird, wenn eine Überdrehzahl ($n_U$) prädiziert wurde, und
- eine Drehzahlregelung unter Verwendung einer Blattwinkelverstellung vorgesehen ist, bei der der Blattwinkel in Abhängigkeit von der Drehzahl verändert wird, und
- eine Überdrehzahl ($n_U$) prädiziert wird, wenn der Blattwinkel um einen vorgebbaren Differenzblattwinkel von einem veränderlichen Referenzblattwinkel ($\alpha_R$) abweicht.

10. Windenergieanlage (100) nach Anspruch 9, **dadurch gekennzeichnet, dass**

- eine Anlagensteuereinheit (103) vorgesehen ist, um die Windenergieanlage (100) zu steuern, und
- die Windenergieanlage (100), insbesondere die Anlagensteuereinheit (103), dazu vorbereitet ist, ein Verfahren nach einem der Ansprüche 1 bis 8 auszuführen.

**Claims**

1. Method for controlling a wind power installation (100) which has rotor blades (108) whose blade angle is adjustable and which can be operated at a variable speed using speed control, wherein

- the speed control is prepared to control the speed to a variable target speed value, comprising the steps of:

- evaluating a test criterion for predicting an emerging overspeed,
- predicting an overspeed ($n_U$) on the basis of the at least one test criterion, and
- changing the speed control if an overspeed ($n_U$) has been predicted, wherein
- the speed control is changed in such a way that a controller gain of the speed control (304) is increased if an overspeed ($n_U$) has been predicted,
- speed control using a blade angle adjustment is provided, in which the blade angle is changed on the basis of the speed, and

- an overspeed ($n_U$) is predicted if the blade angle deviates from a variable reference blade angle ($\alpha_R$) by a predefinable differential blade angle.

2. Method according to Claim 1, **characterized in that**

- an overspeed ($n_U$) denotes a speed which reaches or exceeds a speed limit value which is above a target speed, in particular a nominal speed, by a minimum exceedance value, wherein in particular
- the minimum exceedance value is at least 5%, preferably at least 10%, in particular at least 15%, of the target speed, and/or
- the changing of the speed control is carried out or started before the speed reaches the speed limit value, in particular before the speed reaches a value of 97% of the speed limit value, and/or
- the changing of the speed control is only carried out or started if the speed is above 90%, in particular above 100%, of the target speed or nominal speed.

3. Method according to claim 1 or 2, **characterized in that**

- in order to predict an emerging overspeed ($n_U$), a speed profile is recorded as a time profile of the speed up to a current time and extrapolated in particular beyond the current time to a test time ($t_2$), and
- an emerging overspeed is predicted if
- the speed profile up to the test time ($t_2$) shows a speed increase that is above a predefinable increase limit value, and/or
- the speed profile has a gradient increasing over time, and/or
- the extrapolated speed profile up to the test time ($t_2$) reaches overspeed ($n_U$), and/or
- the extrapolated speed profile, before reaching the test time ($t_2$), in particular at a predefinable pre-test time ($t_1$), exceeds a limit speed ($n_L$) which is less than the overspeed ($n_U$).

4. Method according to any one of the preceding claims, **characterized in that**

- quantitative changing of the speed control, in particular an or the increasing of a controller gain, is carried out on the basis of a or the extrapolated speed profile, in particular in such a way that
- the quantitative changing is carried out on the basis of a magnitude of a or the speed increase, and/or
- the quantitative changing is carried out on the basis of a distance between the speed or the extrapolated speed profile and the limit speed ($n_L$) or a speed threshold value which is less than the limit speed ($n_L$) and greater than a or the target speed or nominal speed,

in particular, the quantitative changing of the speed control is carried out in such a way that

- the controller gain is increased more,
- the greater a speed increase of the extrapolated speed profile, and/or
- the closer the extrapolated speed profile comes to the limit speed ($n_L$).

5. Method according to any one of the preceding claims, **characterized in that**

- an ideal blade angle is specified as the reference blade angle ($\alpha_R$), and
- the ideal blade angle describes a blade angle that leads to a constant speed at a current operating point under steady-state conditions, wherein in particular
- the current operating point is indicated by a current speed value, a current generator power and a current wind speed.

6. Method according to any one of the preceding claims, **characterized in that**

- quantitative changing of the speed control, in particular an or the increasing of a or the controller gain, is carried out on the basis of a magnitude of a or the blade angle deviation, by which the blade angle deviates from a or the variable reference blade angle ($\alpha_R$), in particular in such a way that
- the controller gain is increased if the blade angle deviation exceeds a predetermined minimum deviation value, and/or
- the controller gain is increased more, the greater the blade angle deviation.

7. Method according to any one of the preceding claims, **characterized in that**

- damping control is provided and involves a change in the blade angle depending on a detected longitudinal oscillation of the wind power installation in order to dampen the longitudinal oscillation, and
- the damping control is changed if an overspeed ($n_U$) has been predicted, in particular

    - a gain of the damping control is reduced,
    - the damping control is deactivated, and/or
    - an adjustment of the blade angles of the rotor blades (108) by the damping control is allowed only in the direction of a feathered position.

8. Method according to any one of the preceding claims, **characterized in that**

- the changing of the speed control is only completely cancelled by a predeterminable extension time after the time at which an overspeed is no longer predicted, wherein
- the predeterminable extension time is particularly in the range of 1 to 10 seconds, in particular in the range of 2 to 5 seconds.

9. Wind power installation (100) which has rotor blades (108) whose blade angle is adjustable and which can be operated at a variable speed using speed control, wherein

- the speed control is prepared to control the speed to a variable target speed value, and
- the wind power installation (100) is prepared to carry out steps comprising:

- evaluating a test criterion for predicting an emerging overspeed,
- predicting an overspeed ($n_U$) on the basis of the at least one test criterion, and
- changing the speed control if an overspeed ($n_U$) has been predicted, wherein
- the speed control is changed in such a way that a controller gain of the speed control (304) is increased if an overspeed ($n_U$) has been predicted, and
- speed control using a blade angle adjustment is provided, in which the blade angle is changed on the basis of the speed, and
- an overspeed ($n_U$) is predicted if the blade angle deviates from a variable reference blade angle ($\alpha_R$) by a predefinable differential blade angle.

10. Wind power installation (100) according to Claim 9, **characterized in that**

- an installation control unit (103) is provided in order to control the wind power installation (100), and
- the wind power installation (100), in particular the installation control unit (103), is prepared to carry out a method according to any one of Claims 1 to 8.

**Revendications**

1. Procédé de commande d'une éolienne (100), qui présente des pales de rotor (108) réglables dans leur angle de pale et qui peut fonctionner avec une vitesse de rotation variable à l'aide d'une régulation de vitesse de rotation, dans lequel

- la régulation de vitesse de rotation est destinée à réguler la vitesse de rotation à une valeur de consigne de vitesse de rotation variable, comprenant les étapes :

- d'évaluation d'un critère de contrôle pour prédire une survitesse de rotation imminente,
- de prédiction d'une survitesse de rotation ($n_U$) en fonction de l'au moins un critère de contrôle, et
- de modification de la régulation de vitesse de rotation lorsqu'une survitesse de rotation ($n_U$) a été prédite, dans lequel
- la modification de la régulation de vitesse de rotation s'effectue de telle sorte qu'un gain de régulateur de la régulation de vitesse de rotation (304) est augmenté lorsqu'une survitesse de rotation ($n_U$) a été prédite,
- une régulation de vitesse de rotation est prévue à l'aide d'un réglage de l'angle de pale, avec lequel l'angle de pale est modifié en fonction de la vitesse de rotation, et
- une survitesse de rotation ($n_U$) est prédite lorsque l'angle de pale s'écarte d'un angle de pale différentiel, pouvant être prédéfini, par rapport à un angle de pale de référence ($\alpha_R$) variable.

2. Procédé selon la revendication 1, **caractérisé en ce que**

- une survitesse de rotation ($n_U$) désigne une vitesse de rotation qui atteint ou dépasse une valeur limite de vitesse de rotation qui est supérieure d'une valeur de dépassement minimale par rapport à une vitesse de rotation de consigne, en particulier une vitesse de rotation nominale, dans lequel en particulier
- la valeur de dépassement minimale est d'au moins 5 %, de préférence d'au moins 10 %, en particulier d'au moins 15 % de la vitesse de rotation de consigne, et/ou
- la modification de la régulation de vitesse de rotation est effectuée ou commencée avant que la vitesse de rotation atteigne la valeur limite de vitesse de rotation, en particulier avant que la vitesse de rotation atteigne une valeur de 97 % de la valeur limite de vitesse de rotation et/ou
- la modification de la régulation de vitesse de rotation n'est effectuée ou commencée que si la vitesse de rotation est supérieure à 90 %, en particulier supérieure à 100 % de la vitesse de rotation de consigne ou vitesse de rotation nominale.

3. Procédé selon la revendication 1 ou 2, **caractérisé en ce que**

- pour prédire une survitesse de rotation ($n_U$) apparaissant, une variation de vitesse de rotation est enregistrée comme variation temporelle de la vitesse de rotation jusqu'à un moment actuel et en particulier est extrapolée au-delà du moment actuel à un moment de contrôle ($t_2$), et

- une survitesse de rotation survenant est prédite lorsque

- la variation de vitesse de rotation jusqu'au moment de contrôle ($t_2$) présente une augmentation de vitesse de rotation qui est supérieure à une valeur limite d'augmentation pouvant être prédéfinie, et/ou

- la variation de vitesse de rotation présente une pente augmentant avec le temps, et/ou

- la variation de vitesse de rotation extrapolée jusqu'au moment de contrôle ($t_2$) atteint la survitesse de rotation ($n_U$) et/ou

- la variation de vitesse de rotation extrapolée, avant d'atteindre le moment de contrôle ($t_2$), en particulier à un moment de précontrôle ($t_1$) pouvant être prédéfini, dépasse une vitesse de rotation limite ($n_L$) qui est inférieure à la survitesse de rotation ($n_U$).

4. Procédé selon l'une quelconque des revendications précédentes, **caractérisé en ce que**

- une modification quantitative de la régulation de vitesse de rotation, en particulier une ou l'augmentation d'un gain de régulateur, s'effectue en fonction d'une ou de la variation de vitesse de rotation extrapolée, en particulier de sorte que

- la modification quantitative s'effectue en fonction d'une grandeur d'une ou de l'augmentation de vitesse de rotation, et/ou

- la modification quantitative s'effectue en fonction d'un écart entre la vitesse de rotation ou la variation de vitesse de rotation extrapolée et la vitesse de rotation limite ($n_L$) ou un seuil de vitesse de rotation qui est inférieur à la vitesse de rotation limite ($n_L$), et supérieur à une ou la vitesse de rotation de consigne ou vitesse de rotation nominale,

en particulier la modification quantitative de la régulation de la vitesse de rotation s'effectue de sorte que

- le gain de régulateur est d'autant plus élevé

- une augmentation de vitesse de rotation de la variation de vitesse de rotation extrapolée est importante, et/ou

- la variation de vitesse de rotation extrapolée se rapproche de la vitesse de rotation limite ($n_L$).

5. Procédé selon l'une quelconque des revendications précédentes, **caractérisé en ce que**

- un angle de pale idéal est prédéfini comme angle de pale de référence ($\alpha_R$), et

- l'angle de pale idéal décrit un angle de pale qui, à un point de fonctionnement actuel dans des conditions stationnaires, entraîne une vitesse de rotation constante, dans lequel en particulier

- le point de fonctionnement actuel est **caractérisé par** une valeur de vitesse de rotation actuelle, une puissance de générateur actuelle et une vitesse de rotation du vent actuelle.

6. Procédé selon l'une quelconque des revendications précédentes, **caractérisé en ce que**

- une modification quantitative de la régulation de la vitesse de rotation, en particulier une ou l'augmentation d'un ou du gain de régulateur, s'effectue en fonction d'une grandeur d'un ou de l'écart d'angle de pale duquel l'angle de pale s'écarte d'un ou de l'angle de pale de référence ($\alpha_R$) variable, de sorte que

- le gain de régulateur est augmenté lorsque l'écart d'angle de pale dépasse une valeur d'écart minimale prédéfinie et/ou

- plus l'écart d'angle de pale est important, plus le gain de régulateur est augmenté.

7. Procédé selon l'une quelconque des revendications précédentes, **caractérisé en ce que**

- une régulation d'amortissement est prévue, qui présente une modification de l'angle de pale dépendante d'une oscillation longitudinale détectée de l'éolienne pour amortir l'oscillation longitudinale, et

- la régulation d'amortissement est modifiée lorsqu'une survitesse de rotation ($n_U$) a été prédite en particulier

- un gain de la régulation d'amortissement est réduit,

- la régulation d'amortissement est désactivée, et/ou

- un réglage des pales de rotor (108) dans leurs angles de pale n'est autorisé par la régulation d'amortissement que dans le sens d'une mise en drapeau.

8. Procédé selon l'une quelconque des revendications précédentes, **caractérisé en ce que**

- la modification de la régulation de vitesse de rotation d'un temps de prolongation pouvant être prédéfini n'est complètement annulée qu'après le moment où une survitesse de rotation n'est plus prédite, dans lequel

- le temps de prolongation pouvant être prédéfini se situe en particulier dans la plage de 1 à 10 secondes, en particulier dans la plage de 2 à 5 secondes.

9. Éolienne (100) qui présente des pales de rotor (108) réglables dans leur angle de pale et peut fonctionner avec une vitesse de rotation variable à l'aide d'une régulation de vitesse de rotation, dans laquelle

- la régulation de vitesse de rotation est destinée à réguler la vitesse de rotation à une valeur de consigne de vitesse de rotation variable, et
- l'éolienne (100) est destinée à exécuter des étapes, comprenant :

  - d'évaluation d'un critère de contrôle pour prédire une survitesse de rotation imminente,
  - la prédiction d'une survitesse de rotation ($n_U$) en fonction de l'au moins un critère de contrôle, et
  - la modification de la régulation de vitesse de rotation lorsqu'une survitesse de rotation ($n_U$) a été prédite, dans laquelle
  - la modification de la régulation de vitesse de rotation s'effectue de sorte qu'un gain de régulateur de la régulation de vitesse de rotation (304) soit augmenté lorsqu'une survitesse de rotation ($n_U$) a été prédite, et
  - une régulation de vitesse de rotation est prévue à l'aide d'un réglage de l'angle de pale, avec lequel l'angle de pale est modifié en fonction de la vitesse de rotation, et
  - une survitesse de rotation ($n_U$) est prédite lorsque l'angle de pale s'écarte d'un angle de pale différentiel, pouvant être prédéfini, par rapport à un angle de pale de référence ($\alpha_R$) variable.

10. Éolienne (100) selon la revendication 9, **caractérisée en ce que**

- une unité de commande d'éolienne (103) est prévue pour commander l'éolienne (100), et
- l'éolienne (100), en particulier l'unité de commande d'éolienne (103), est destinée à mettre en œuvre un procédé selon l'une quelconque des revendications 1 à 8.

Fig. 1

Fig. 2

Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2015176570 A1